**Europäisches Patentamt**

**European Patent Office**

**Office européen des brevets**

(19)

(11) **EP 1 588 611 A1**

(12) **EUROPEAN PATENT APPLICATION**
published in accordance with Art. 158(3) EPC

(43) Date of publication:
**26.10.2005 Bulletin 2005/43**

(51) Int Cl.⁷: **A01K 87/00**

(21) Application number: **03815445.6**

(86) International application number:
**PCT/JP2003/000686**

(22) Date of filing: **24.01.2003**

(87) International publication number:
**WO 2004/064508 (05.08.2004 Gazette 2004/32)**

(84) Designated Contracting States:
**AT BE BG CH CY CZ DE DK EE ES FI FR GB GR HU IE IT LI LU MC NL PT SE SI SK TR**

(71) Applicant: **SHIMANO INC.**
**Sakai-shi, Osaka 590-8577 (JP)**

(72) Inventors:
- **Kawashita, Gouki**
  **Sakai-shi, Osaka 590-8577 (JP)**
- **Okada, Muneki**
  **Sakai-shi, Osaka 590-8577 (JP)**
- **Kishimoto, Toshihisa**
  **Sakai-shi, Osaka 590-8577 (JP)**

- **Kanazawa, Masahide**
  **Sakai-shi, Osaka 590-8577 (JP)**
- **Morita, Atsushi**
  **Sakai-shi, Osaka 590-8577 (JP)**
- **Okuda, Ryozo**
  **Sakai-shi, Osaka 590-8577 (JP)**

(74) Representative: **Hofmann, Harald**
**Sonnenberg Fortmann,**
**Patent- und Rechtsanwälte,**
**Herzogspitalstrasse 10a**
**80331 München (DE)**

(54) **FISHING ROD GROUP**

(57)     The present invention provides a fishing rod set of a series of rods with different lengths capable of avoiding uncomfortable sensation of the operativity of fishing rod when an angler changes different fishing rods from one to another. The fishing rod set comprises four fishing rods with overall lengths of 2700 mm, 3000 mm, 3300 mm, and 3600 mm. The overall lengths of at least three fishing rods in the four fishing rods, and the primary resonance frequencies of the at least three fishing rods have a relationship where they lie linearly in coordinates with one axis of the overall length and another axis of the resonance frequency.

*Fig. 1*

**EP 1 588 611 A1**

**Description**

[Technical Field]

The present invention relates to a fishing rod set comprising a plurality of fishing rods with different lengths, and more particularly to a hera fishing rod set used for hera-crucian fishing.

[Background Art]

For hera-crucian fishing, a hera fishing rod composed of materials, such as natural bamboo and fiber reinforced resin, is used. Generally, hera fishing rods are composed of a plurality of connected rod bodies as one long fishing rod in a put-over joint manner or a spigot joint manner. In addition, a grip and a fishing-line lock are provided at a handle-end side end and a fore side end in the plurality of connected rod bodies as one long fishing rod.

As for this type of hera fishing rod, sincean angler uses hera fishing rods with different lengths depending on the situation of fishing spot, and target hera-crucian, it is popular that an anger has hera fishing rods with different lengths to use them as a hera fishing rod set. Accordingly, a plurality of hera fishing rods with different lengths in the range about 9 shaku (2700 mm) to 12 shaku (3600 mm) by 1 shaku are prepared, and they often are manufactured and sold as one series.

In the hera fishing rod, the angler considers so-called "characteristics (Choshi) of rod" as one of the most important factors. In the hera fishing rod, the anger casts the tackle to a target point and catches up fish only with the characteristics of the fishing rod without reel. The total characteristics of various factors, such as weight, flexibility and an extent of deflection of the rod, are considered as important.

However, in the case where the angler prepares a plurality of hera fishing rods with different lengths as mentioned above, and fishes while changing the hera fishing rods with different lengths from one to another, the angler may not operate them well due to the difference among the "characteristics of rods" in the hera fishing rods. For example, in the case where the angler previously fishes with a hera fishing rod of 10 shaku, when he changes it to a hera fishing rod of 8 shaku, the change of weight, length, or the like, causes problems that makes the rod operation similar to the hera fishing rod previously used difficult for casting the tackle to a target point, for striking fish on the tackle well, and so on.

Accordingly, a hera fishing rod set of a series of hera fishing rods having unified weight and weight balance is proposed (for example, Japanese: unexamined patent application publication No. 2002-058393). This hera fishing rod set is aimed at solving the above problem when the angler changes a hera fishing rod to another rod by unifying the weight balance in the hera fishing rod set.

Indeed, it is considered that the weight balance of a fishing rod is an important factor that exerts an influence upon the operativity of the fishing rod. However, the operativity of a fishing rod is not always improved only by its weight balance. The above problem is not completely solved only by weight balance. It is assumed that so-called "characteristics of rod" is provided by complex effects of various factors, such as length of fishing rod itself, elasticity of material, and weight. Accordingly, technology and technique for a fishing rod avoiding uncomfortable sensation when an angler changes a hera fishing rod have been further studied.

An object of the present invention is to provide a fishing rod set of a series of rods with different lengths capable of avoiding uncomfortable sensation of the operativity of fishing rod when an angler changes a fishing rod to another.

[Disclosure of the Invention]

The inventors of the present invention have been diligently studied to solve the above problem, and, as a result, found that the resonance frequencies of fishing rods effectively control so-called "characteristics of rods". The present invention has made based on this finding.

That is, a fishing rod set of one aspect of the present invention comprises at least four fishing rods with overall lengths of 2700 mm, 3000 mm, 3300 mm, and 3600 mm. The overall lengths of at least three fishing rods in the four fishing rods, and the primary resonance frequencies of these at least three fishing rods have a relationship where they lie linearly in coordinates with one axis of the overall length and another axis of the resonance frequency. In addition, in another aspect of the present invention, the overall lengths of at least three fishing rods in the four fishing rods, and the secondary resonance frequencies of these at least three fishing rods have a relationship where they lie linearly in coordinates with one axis of the overall length and another axis of the resonance frequency. Additionally, in still another aspect of the present invention, the overall lengths of at least three fishing rods in the four fishing rods, and the third resonance frequencies of these at least three fishing rods have a relationship where they lie linearly in coordinates with one axis of the overall length and another axis of the resonance frequency.

The "characteristics of rods" can be unified by setting the respective resonance frequencies of fishing rods with the overall lengths in any of the primary to third resonance frequencies to provide a unified resonance frequency as mentioned above.

In addition, "9 shaku (2700 mm)" to "12 shaku (3600 mm)" refers to a conceptual range with a certain width according to manufacturing or convention. From this point of view, this "9 shaku" may actually be an extent of the range of 2670 mm to 2790 mm. Similarly, "10 shaku" to "12 shaku" also refers to a conceptual range with a certain width according to manufacturing or convention.

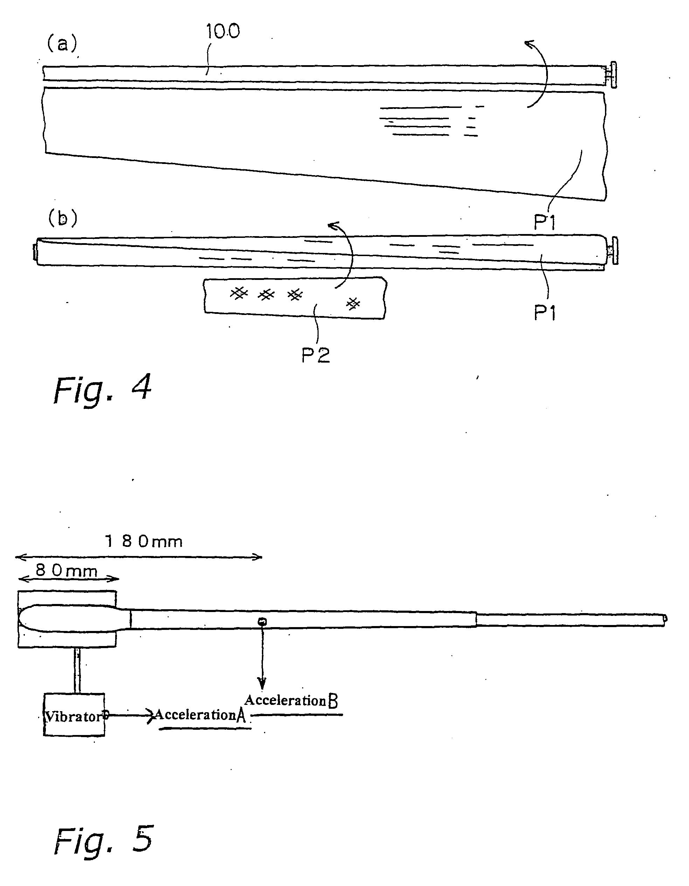

Additionally, the "primary to third resonance frequencies" refer to frequencies of a fishing rod measured by the following method. First, a sandwich member sandwiches and secures a fishing rod in the range of 80 mm from the handle-end side end thereof to maintain the fishing rod in the horizontal direction. A vibrator vibrates the fishing rod via this sandwich member (frequency of fishing rod). An acceleration sensor senses the acceleration of this vibrator and obtains an input acceleration value (A). On the other hand, the acceleration sensor senses the acceleration at the position of 180 mm from the handle-end side end of the fishing rod and obtains the output acceleration value (B) (see Fig. 5). The ratios of B/A are plotted in the coordinates with one axis of the frequency of fishing rod. The frequencies in the states where the ratios of B/A reach the peaks (resonance vibration states) are obtained as the primary, secondary and third resonance frequencies in the increasing order of the frequencies of fishing rod. An example of graph of the ratios of B/A plotted in the coordinates with one axis of the frequency of fishing rod is shown below (this graph is only an example, but not shows the specific values in this invention).

(TABLE 1)

Furthermore, a fishing rod set of another aspect of the present invention comprises a plurality of fishing rods with different overall lengths in the range of 2700 to 3600 mm. In addition, the overall lengths of the plurality of fishing rods, and the primary resonance frequencies of the fishing rods have a relationship where they lie linearly in coordinates with one axis of the overall length and another axis of the resonance frequency. In addition, in another aspect of the present invention, the overall lengths of the plurality of fishing rods, and the secondary resonance frequencies of the fishing rods have a relationship where they lie linearly in coordinates with one axis of the overall length and another axis of the resonance frequency. Additionally, in still another aspect of the present invention, the overall lengths of the plurality of fishing rods, and the third resonance frequencies of the fishing rods have a relationship where they lie linearly in coordinates with one axis of the overall length and another axis of the resonance frequency.

The reason that the overall lengths of the fishing rods, and their resonance frequencies have a relationship where they lie linearly in the coordinates in the range of 2700 to 3600 mm of the fishing rods is as follows.

That is, we investigated the relationship in a known fishing rod between the overall length of a fishing rod and its resonance frequency, and as a result, found they were in inverse proportion in terms of its shape (it is noted that this Table 2 is only an example, but not shows the specific values in this invention). In this case, although there were some differences depending on the various factors, such as material, diameter and thickness of fishing rod, the relationship between the overall length of a fishing rod and its resonance frequency had a sharp curvature in the range of about 2700 to 3600 mm of the overall length of fishing rod. In the overall length longer or shorter than the above range, the overall length of a fishing rod and its resonance frequency had a relationship where they lie substantially linearly. It is assumed that this curvature in the relationship of them largely affects the "characteristics of rod".

In a hera fishing rod used generally, the range of about 2700 to 3600 mm of the overall length of fishing rod is a frequently used range. That reason is that this range corresponds to the range where an angler feels uncomfortable sensation of the operativity of fishing rod when he changes fishing rods with different lengths from one to another.

(TABLE 2)

[Brief Description of the Drawings]

Fig. 1 is a view showing a hera fishing rod set.
Fig. 2 is a view showing one hera fishing rod that composes the hera fishing rod set.
Fig. 3 is an enlarged view showing an intermediate rod 2 of the hera fishing rod of Fig. 2.
Fig. 4 is a view showing a manufacturing process of the intermediate rod 2 of Fig. 3.
Fig. 5 is a view showing a measurement state of resonance frequency according to the present invention.
Fig. 6 is a reference view in a finite element model.
Fig. 7 is a reference view in a link model.

[Best Mode of Carrying Out the Invention]

A hera fishing rod set in which one embodiment of the present invention is adopted is described.

(Hera Fishing Rod Set)

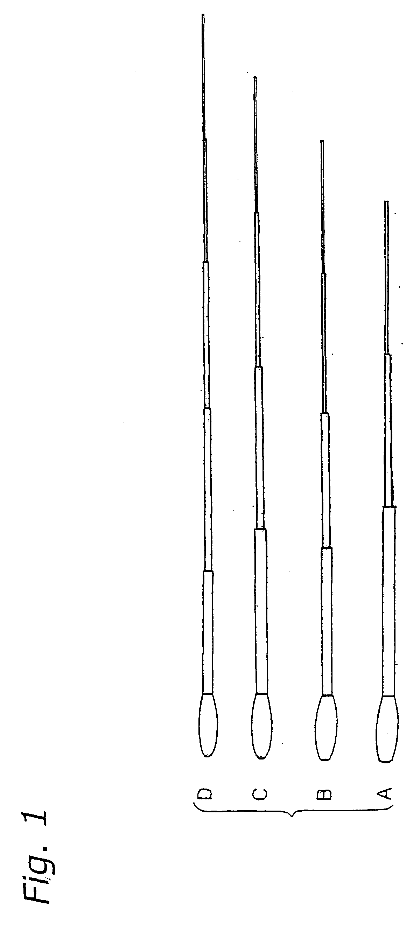

This hera fishing rod set is a package of a plurality of hera fishing rods with different overall lengths. Although the number of the hera fishing rods that composes the hera fishing rod set is arbitrary number, for example, a plurality of fishing rods with different lengths in the range of about 8 shaku to 14 shaku by 1 shaku are prepared, and are grouped. As shown in Fig. 1, the hera fishing rod set includes at least four hera fishing rods of hera fishing rods A, B, C, and D that have lengths of 9 shaku (2700 mm), 10 shaku (3000 mm), 11 shaku (3300 mm), and 12 shaku (3600 mm), respectively.

(Structure of Hera Fishing Rod)

Each of the hera fishing rods that compose the aforementioned hera fishing rod set is described.
Each of these hera fishing rods is composed of a plurality of connected rod bodies as one fishing rod. Although depending on the overall length of hera fishing rod, for example, the fishing rod is composed of three to five connected rod bodies. The rod bodies have larger diameters as they are located closer to the handle end side. In addition, each rod body is a tapered tubular member.

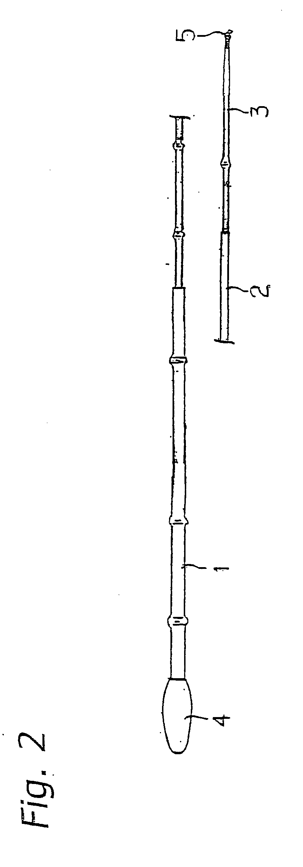

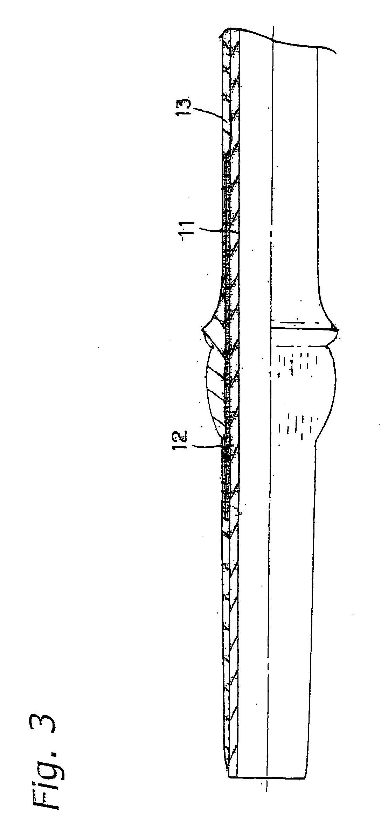

For example, the hera fishing rod A with 9 shaku includes three rod bodies of a base rod 1, an intermediate rod 2, and a fore end rod 3 in order from the handle end side, as shown in Fig. 2. These rod bodies are formed by burning a prepreg material reinforced fiber, such as carbon fiber or glass fiber, impregnated with a synthetic resin. As discussed later, prepreg with high specific gravity is partially laminated. These rod bodies are coated to have fake natural bamboo appearance. For example, a knot or a branch trace of bamboo can be formed by three-dimensional coating (see Fig. 3).

The rod bodies are successively connected in a so-called put-over joint manner. For example, the handle-end side end of the intermediate rod 2 is partially inserted into the fore side end of the base rod 1, thus they are connected to each other. But a joint manner for connecting these rod bodies is not limited to a put-over joint. Needless to say, known joints (for example, telescopic joint, spigot joint, and so on) can be applied. In addition, a grip 4 formed by winding a tape-shaped material impregnated with a urethane resin, or the like, is provided on the handle-end side end of the base rod 1, while a fishing line interlock 5 is attached to the fore side end of the fore end rod 3. In the state where these three rod bodies are connected successively, the overall length of hera fishing rod is 9 shaku (2700 mm).

With reference to Fig. 3, the intermediate rod 2 is described as exemplary example of the structure of rod bodies that compose this hera fishing rod A with 9 shaku.

The intermediate rod 2 includes a main layer 11, a weight layer 12 laminated in a certain range in the axial direction as an outer periphery layer of the main layer 11, and a coating layer 13 laminated on or above the outer periphery of these main layer 11 and weight layer 12.

The main layer 11 is a layer composed of a laminated prepreg material. In this case, one kind or two different kinds of prepreg material(s) can be laminated. For example, tape-shaped and sheet-shaped prepreg materials in which carbon fiber is impregnated with an epoxy resin can be given as the material. In the tape-shaped prepreg material, the carbon fiber is oriented in the circumferential direction or in the direction that extends at a certain angle relative to the circumferential direction. In the sheet-shaped prepreg material, carbon fiber is oriented in the axial direction.

The weight layer 12 is composed of a prepreg material with high specific gravity. The prepreg material with high specific gravity is a material in which metal powder such as tungsten is mixed additionally with glass scrim impregnated with an epoxy resin, for example. This prepreg material with high specific gravity has an extent of 500 to 600 g/mm$^2$, and of thickness of 0.100 to 0.150 mm. This prepreg material with high specific gravity is laminated on the aforementioned main layer 11 in a prescribed axial location calculated as discussed later.

The coating layer 13 is formed by applying a synthetic resin coating material, such as epoxy resin and urethane resin. The stepped difference between the main layer 11 and the weight layer 12 is canceled by this coating layer 13. In the case where a knot of bamboo is formed on the intermediate rod 2 to have fake natural bamboo appearance as shown in Fig. 2, a prepreg material is partially wound and burned, or an epoxy resin is applied thickly and partially, and it is cuts off in a prescribed shape to form a knot of bamboo, and so on. Although other rod bodies have different diameters, and so on, they have similar structure, thus, their description is omitted.

(Relationship of Hera Fishing Rods)

The aforementioned four hera fishing rods A to D are adjusted so that the overall lengths of these hera fishing rods, and the primary resonance frequencies of the hera fishing rods have a relationship where they lie linearly in coordinates with one axis of the overall length and another axis of the resonance frequency. The primary resonance frequencies of hera fishing rod A of 9 shaku (2700 mm), hera fishing rod B of 10 shaku (3000 mm), hera fishing rod C of 11 shaku (3300 mm), and hera fishing rod D of 12 shaku (3600 mm) are adjusted to 1.90 Hz, 1.75 Hz, 1.60 Hz, and 1.45 Hz, respectively. The primary resonance frequencies are set to the above values, thus, the overall lengths of the hera fishing rods that compose the hera fishing rod set, and their primary resonance frequencies can have a relationship where they lie linearly in coordinates with one axis of the overall length and another axis of the resonance frequency, as shown in following Table 3. In this case, the overall lengths of all the fishing rods in the four fishing rods, and their primary resonance frequencies have a relationship where they lie linearly in coordinates with one axis of the overall length and another axis of the resonance frequency, however, only three fishing rods that are arbitrarily selected in the four fishing rods may have this relationship.

(TABLE 3)

Additionally, in this embodiment, the overall lengths of the four fishing rods are specified to the prescribed lengths. However, fishing rods with arbitrary lengths that are suitably selected in the range of 2700 to 3600 mm of overall length may be manufactured so that, in a plurality of the manufactured fishing rods (at least, three or more fishing rods with different overall lengths), the respective overall lengths of the hera fishing rods, and their primary resonance frequencies have a relationship where they lie linearly in coordinates with one axis of the overall length and another axis of the resonance frequency.

Specifically, the primary resonance frequencies of the hera fishing rods are adjusted as follows. For example, in the hera fishing rod A with 9 shaku (2700 mm), in the case where its primary resonance frequency is adjusted to 1.90 Hz when the base rod 1 to the fore end rod 3 are connected to each other, first, the weight balance of the rod body is calculated. That is, in consideration of target diameters and lengths of base rod 1 to the fore end rod 3, elasticities and weights of a prepreg material and a prepreg material with high specific gravity, and so on, the weight distribution in the rod bodies that provide 1.90 Hz of frequency (resonance frequency) of the fishing rod in primary resonance is simulated, then the axial range where the aforementioned prepreg material with high specific gravity should be laminated is calculated for every rod body. In order to simulate such weight distribution, techniques, such as finite element method or link model, can be used.

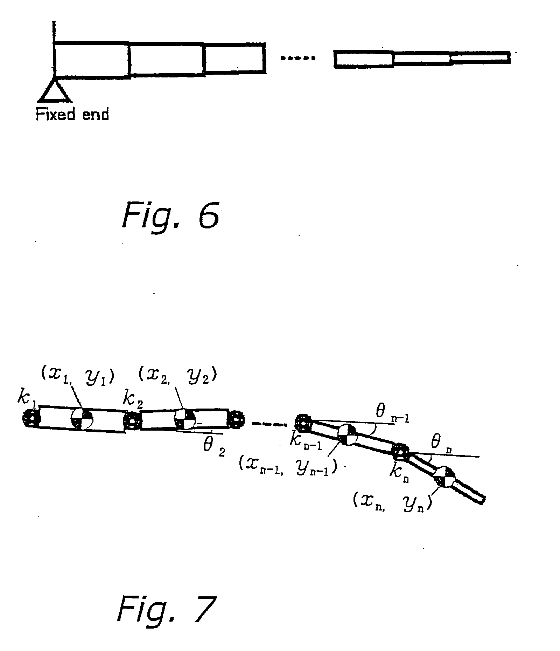

For example, in analysis by a finite element method, as shown in Fig. 6, the fishing rod is modeled by using an elastic cantilever composed of N of one-dimensional cantilever elements that have two degrees of freedom of the translational direction and the rotational direction at node. It is assumed that each cantilever element is uniform inside the element in cross section. Under the boundary condition in the state where one end is an fixed end and the other end is a free end, the resonance frequency and the mode shape corresponding to it are calculated.

In analysis by a link model, since a fishing rod largely deforms in use, the fishing rod is modeled by using multibody dynamics corresponding to large deformation (geometric nonlinearity). As shown in Fig. 7, in this case, the fishing rod is modeled by using a multibody composed of N of rigid body links with rotation spring at node. The fishing rod is modeled by using a link model, thus, the posture angle between rigid body links adjacent to each other is not limited. Accordingly, it is possible to express even large deformation. The equation of motion of the fishing rod can be represented by Equation 1 under the constraint condition.

(EQUATION 1)

$$\begin{bmatrix} M & \Phi_q^T \\ \Phi_q & 0 \end{bmatrix} \begin{Bmatrix} \ddot{q} \\ \lambda \end{Bmatrix} = \begin{Bmatrix} Q \\ \gamma \end{Bmatrix}$$

Subsequently, as shown in Fig. 4(a), a mandrel 100 that corresponds to diameter or taper variation of each rod body (one of the base rod 1 to the fore end rod 3) is wound with a necessary prepreg material P1 (a tape-shaped or sheet-shaped material can be wound as discussed above), and a prepreg material with high specific gravity P2 is wound around the prescribed axial range that is calculated as discussed above (Fig. 4(b)). In order to sufficiently provide weight, several plies of the prepreg material with high specific gravity P2 may be wound. Although only one sheet of prepreg material with high specific gravity P2 is wound on the prepreg material P1 in Fig. 4(b), two or more sheets of prepreg materials with high specific gravity P2 may be wound so as to be spaced from each other in the axial direction.

In addition, an epoxy resin is applied to its outer periphery, thus, rod materials corresponding to the base rod 1 to the fore end rod 3 are produced, respectively. These are burned in a furnace. After burning, each rod material is subjected to polish processing on its outer periphery, and is cut at both ends to have a prescribed axial length. Thus, rod bodies are produced, and the hera fishing rod A is provided. Similarly, the hera fishing rods B to D are manufactured.

In the case where the overall lengths of the hera fishing rods that compose the hera fishing rod set, and their primary resonance frequencies have a relationship where they lie linearly in coordinates with one axis of the overall length and another axis of the resonance frequency, it is possible to eliminate uncomfortable sensation even when the angler changes a hera fishing rod to another rod in the hera fishing rod set depending on the situation. For example, when the angler changes the hera fishing rod A to the hera fishing rod D with long overall length depending on the situation, in fishing operation, such as casting and striking fish, the angler can fish without feeling a change in the operation while gripping the hera fishing rod.

In this embodiment, the hera fishing rod set in which the primary resonance frequencies are unified is illustrated. However, in the case where the secondary or third resonance frequencies are unified in a hera fishing rod set, similarly, it is possible to suppress uncomfortable sensation when the angler changes a hera fishing rod to another rod.

Furthermore, in this embodiment, a technique in which a prepreg material with high specific gravity is partially laminated to adjust the weight balance of rod bodies is illustrated, however, the present invention is not limited to this. For example, a component attached to a rod body (fishing line guides, and so on, in the case of a fishing rod to which fishing line guides are attached) may be used to adjust the weight balance.

Moreover, in this embodiment, the weight balance of rod body is mainly taken in consideration to unify and the respective resonance frequencies of fishing rods that compose the fishing rod set. However, it is considered to control the resonance frequencies in consideration of the variation rate of the diameter in the axial direction (taper) of rod body that composes a fishing rod, the modulus of tensile elasticity of a fiber reinforced resin that composes a rod body, the thickness variation in the axial direction of a rod body, and the like.

[Industrial Applicability]

As described above, according to a fishing rod set of the present invention, it is possible to avoid uncomfortable sensation of the operativity of fishing rod when an angler changes different fishing rods from one to another.

**Claims**

1.  A fishing rod set comprising four fishing rods with overall lengths of 2700 mm, 3000 mm, 3300 mm, and 3600 mm, wherein the overall lengths of at least three fishing rods in said four fishing rods, and the primary resonance frequencies of these at least three fishing rods have a relationship where they lie linearly in coordinates with one axis of the overall length and another axis of the resonance frequency.

2.  A fishing rod set comprising four fishing rods with overall lengths of 2700 mm, 3000 mm, 3300 mm, and 3600 mm, wherein the overall lengths of at least three fishing rods in said four fishing rods, and the secondary resonance frequencies of these at least three fishing rods have a relationship where they lie linearly in coordinates with one axis of the overall length and another axis of the resonance frequency.

3.  A fishing rod set comprising four fishing rods with overall lengths of 2700 mm, 3000 mm, 3300 mm, and 3600 mm, wherein the overall lengths of at least three fishing rods in said four fishing rods, and the third resonance frequencies of these at least three fishing rods have a relationship where they lie linearly in coordinates with one axis of the overall length and another axis of the resonance frequency.

4.  A fishing rod set comprising a plurality of fishing rods with different overall lengths in the range of 2700 to 3600 mm, wherein the overall lengths of said plurality of fishing rods, and the primary resonance frequencies of the fishing rods have a relationship where they lie linearly in coordinates with one axis of the overall length and another axis of the resonance frequency.

5. A fishing rod set comprising a plurality of fishing rods with different overall lengths in the range of 2700 to 3600 mm, wherein the overall lengths of said plurality of fishing rods, and the secondary resonance frequencies of the fishing rods have a relationship where they lie linearly in coordinates with one axis of the overall length and another axis of the resonance frequency.

6. A fishing rod set comprising a plurality of fishing rods with different overall lengths in the range of 2700 to 3600 mm, wherein the overall lengths of said plurality of fishing rods, and the third resonance frequencies of the fishing rods have a relationship where they lie linearly in coordinates with one axis of the overall length and another axis of the resonance frequency.

Fig. 1

Fig. 2

Fig. 3

(a)

100

P1

(b)

P1

※ ※ ※        ※

P2

*Fig. 4*

180mm

80mm

Acceleration B

Vibrator → Acceleration A

*Fig. 5*

Fixed end

Fig. 6

Fig. 7

## INTERNATIONAL SEARCH REPORT

International application No.

PCT/JP03/00686

A. CLASSIFICATION OF SUBJECT MATTER
   Int.Cl⁷  A01K87/00

According to International Patent Classification (IPC) or to both national classification and IPC

B. FIELDS SEARCHED

Minimum documentation searched (classification system followed by classification symbols)
   Int.Cl⁷  A01K87/00-08

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2003 |
| Kokai Jitsuyo Shinan Koho | 1971-2003 | Jitsuyo Shinan Toroku Koho | 1996-2003 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | CD-ROM of the specification and drawings annexed to the request of Japanese Utility Model Application No. 78168/1992 (Laid-open No. 34459/1994) (Daiwa Seiko Inc.), 10 May, 1994 (10.05.94), Full text; Figs. 1 to 3 (Family: none) | 1-6 |
| A | JP 4-320637 A  (Daiwa Seiko Inc.), 11 November, 1992 (11.11.92), Full text; Figs. 1 to 9 (Family: none) | 1-6 |
| A | JP 2000-83518 A  (Kabushiki Kaisha Shimano), 28 March, 2000 (28.03.00), Full text; Figs. 1 to 7 (Family: none) | 1-6 |

☐ Further documents are listed in the continuation of Box C.   ☐ See patent family annex.

| | |
|---|---|
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br>    12 May, 2003 (12.05.03) | Date of mailing of the international search report<br>    27 May, 2003 (27.05.03) |
| Name and mailing address of the ISA/<br>    Japanese Patent Office | Authorized officer |
| Facsimile No. | Telephone No. |

Form PCT/ISA/210 (second sheet) (July 1998)